# EUROPÄISCHE PATENTSCHRIFT

(11) **EP 0 937 011 B1**
(45) Veröffentlichungstag und Bekanntmachung des Hinweises auf die Patenterteilung: **11.12.2002**
(21) Anmeldenummer: 98922570.1
(22) Anmeldetag: 10.06.1998
(51) Int. Cl.: C02F 1/72

(54) **OXIDATIONSVERFAHREN UND ANLAGE ZUR BEHANDLUNG VON ABWÄSSERN**
OXIDATION METHOD AND SEWAGE TREATMENT PLANT
PROCEDE D'OXYDATION ET INSTALLATION DE TRAITEMENT D'EAUX USEES

(30) Priorität: 14.06.1997 CH 144397
(43) Veröffentlichungstag der Anmeldung: 25.08.1999
(73) Patentinhaber: Marte, Walter, CH-9631 Ulisbach (CH); Meyer, Martin, 8032 Zürich (CH)
(72) Erfinder: MARTE, Walter, CH-9631 Ulisbach (CH); MEYER, Martin, CH-8032 Zürich (CH); MEYER, Ulrich, CH-8006 Zürich (CH)
(74) Vertreter: Goth, Helmut, Dr.
(86) Internationale Anmeldenummer: CH9800250
(87) Internationale Veröffentlichungsnummer: WO98057895

(56) Entgegenhaltungen:
- EP-A- 0 379 204
- DE-C- 4 446 375
- US-A- 5 120 442
- US-A- 5 240 598
- US-A- 5 494 585

## Beschreibung

Die Erfindung betrifft Verfahren zur Oxidation belasteter Abwässer sowie eine Anlage zur Durchführung des Verfahrens gemäss den Patentansprüchen 1 und 10.

Die heute installierten hausintemen Abwasserentsorgungsanlagen für nicht biokompatible organische Inhaltstofie arbeiten meistens nach einem der verschiedenen Fällungsprinzipien (Elektroflotation, Flockung mit Sedimentation oder Flotation, etc.), wobei in allen Verfahren unerwünschter Schlamm als Folgeproblem entsteht. Die Schlammentsorgung bereitet zunehmend grosse Schwierigkeiten, da eine einfache Deponierung kaum mehr möglich ist und als Ausweg nur die Schlammverbrennung zur Verfügung steht. Alle Flockungs-/Fällungsverfahren können zudem lediglich eine mehr oder weniger von den Inhaltstoffen abhängige Teilentlastung des Abwassers bewirken, welche jedoch mit einem sehr hohen und schlammverursachenden Chemikalieneinsatz erkauft werden muss.

Zunehmende Bedeutung in der Entsorgung organischer Inhaltstoffe hochbelasteter Teilströme gewinnen deshalb heute schlammfreie Verfahren, wie beispielsweise Autoxidationsprozesse (N. M. Emanuel, Z. K. Maizus, I. P. Skibida, Angew. Chem. 81, 91 - 101 (1969)). Solche Verfahren sind in der chemischen Industrie zur Synthese, aber auch zur Entsorgung von Sondermüll bekannt. Wichtige industrielle Anwendungen in der Entsorgungstechnik liegen in der Hochtemperatur-Nassverbrennung, welche bei 180 - 280 °C mit reinem Sauerstoff (H. R. Kläy, Sulzer Technical Review 4, 41 - 43 (1988)), wie z.B. nach dem Krupp-KATOX-Verfahren, durchgeführt werden. Ein weiterer mit Sauerstoff geführter, als Niederdruckverfahren bezeichneter Autoxidationsprozess ist das Bayer-"LOPROX"-Verfahren (K. Holzer, Umwelt, Bd. 21, 179 - 181 (1991)), welches unter 200 °C mit Betriebsdrücken von 5 - 20 bar arbeitet.

Neuere Verfahren zur Nassverbrennung von organischen Substanzen arbeiten vorwiegend unter 100 °C mit Wasserstoffperoxid und Eisensalzen, wobei dieses System als "Fentons Reagens" bekannt ist (F. Haber, J. Weiss, Proc. Roy. Soc. (London) A 147, 332-351 (1934); U. Sewekow, Melliand Textilberichte 1993, 153-157). Die auf reinem "Fentons Reagens" basierenden Verfahren haben bis heute keine industrielle Bedeutung erlangt, da die Verfahrenskosten viel zu hoch sind. Hierbei ist das Wasserstoffperoxid das alleinige Reagens, welches zur Oxidation der zu entsorgenden Substanzen eingesetzt wird.

In der Offenlegungsschrift DE-A1-4314521 wird ein auf dem Fentons-Reagens basierenden Verfahren beschrieben (FENTOX-Verfahren), welches zur Reinigung von organisch belasteten Industrieabwässern vorgesehen ist. Dabei wird allenfalls mindestens ein zweiter Reaktor zur Abreaktion herangezogen, was aufwendig ist.

In Arbeiten von W. Feuerstein et al. (Vom Wasser 56, 35 - 54 (1981)) wurden auch Kombinationen von Wasserstoffperoxid und Luftsauerstoff zur Oxidation von organischen Abwasserinhaltstoffen beschrieben, wobei der in die Reaktionsmischung eingeleitete Sauerstoff den Abbau erheblich beschleunigt.

Wesentliche Nachteile bekannter Autoxidationsverfahren zur Entsorgung organischer Abwasserinhaltstoffe sind die hohen Temperaturen, die Werkstoffprobleme der Reaktoren, bedingt durch die Betriebstemperatur und das Reaktorprinzip sowie die Betriebskosten.

Aufgabe der Erfindung ist es, ein Oxidationsverfahren zur Behandlung von organisch belasteten Abwässern in einem Reaktor mit einem Düsensystem bei Zugabe eines Radikalstarters, eines Katalysators und eines O₂-haltigen Gases unter instationären Strömungsbedingungen vorzuschlagen. Eine weitere Aufgabe der Erfindung ist es, eine Anlage zur Durchführung des Verfahrens vorzuschlagen.

Die Aufgabe wird gelöst durch ein Verfahren gemäss Patentanspruch 1, und mit einer Anlage gemäss Patentanspruch 10.

Das Verfahren, die dazu gehörige Anlage und das Düsensystem werden im folgenden beschrieben. Es zeigen:
- Fig. 1: Radikalkettenreaktionen in schematischer Darstellung
- Fig. 2: Oxidationsanlage in schematischer Darstellung
- Fig. 3A: Erste Triebstrahldüse in Seitenansicht
- Fig. 3B: Erste Triebstrahldüse in Aufsicht
- Fig. 4A-4C: Weitere Ausführungsbeispiele einer Triebstrahldüse mit verschiedenen Düsenköpfen in Aufsicht
- Fig. 5: Reaktionsdüse im Längsschnitt
- Fig. 6: Düsensystem mit Schlitzdüsen in isometrischer Darstellung (aufgeschnitten)

Das erfindungsgemässe Verfahren und die damit verbundenen Reaktoreinbauten, insbesondere das Düsensystem lassen eine Betriebsweise ohne die zuvor genannten Nachteile zu.

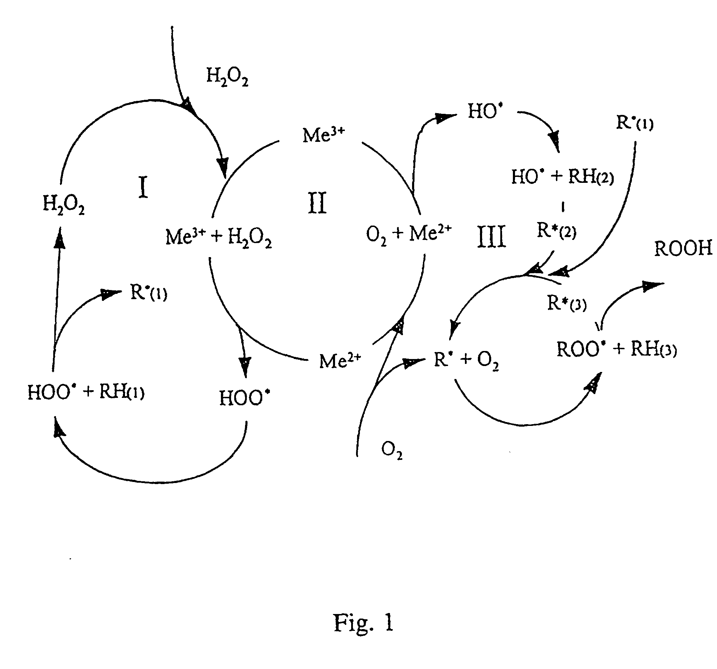

Fig. 1 zeigt die dem Verfahren zugrunde liegenden Radikalkettenreaktionen in schematischer Darstellung.
Die Autoxidation der organischen Abwasserinhaltstoffe wird durch einen Radikalstarter oder durch ein radikalbildendes Oxidationsmittel ausgelöst. Als solche kommen Verbindungen aus der Gruppe der Azo-Verbindungen wie Azobisisobutyronitril (AIBN) und Azobis(cyclohexancarbonitril) oder Verbindungen aus der Gruppe der Peroxid-Verbindungen wie Benzoylperoxid, Di-tert-butylperoxid und Wasserstoffperoxid in Frage, vorzugsweise Wasserstoffperoxid. In Fig. 1 wird Wasserstoffperoxid stellvertretend für einen Radikalstarter oder ein radikalbildendes Oxidationsmittel dargestellt.
Die Radikalkettenreaktion I startet durch die Reaktion des Peroxids mit dem höherwertigen Katalysatorion, indem dieses in eine niedrigere Oxidationsstufe unter Bildung eines Hydroperoxidradikals HOO* überführt wird. Im Folgeschritt reagiert das Hydroperoxidradikal mit dem Substrat RH(1), resp. mit den Abwasserinhaltstoffen. Dies erfolgt unter Freisetzung von Peroxid und eines Kohlenstoffradikals R*(1), wobei beide Spezies wieder in den Kreislauf (I, bzw. III) eingeführt werden.

Als Katalysator kommen Salze der Übergangsmetalle, wie jene von Eisen, Mangan, Kupfer, Chrom u.a.m. in Frage, und vorzugsweise Eisensuifate.

Die Katalysatorreaktion II entspricht einem Reaktionszyklus, in dessen Verlauf das höherwertige Katalysatorion durch das Peroxid in das niederwertige und dieses durch den zugeführten Sauerstoff wieder in das höherwertige überführt wird.

Die Sauerstoffkettenreaktion III startet mit der Zufuhr eines O₂-haltigen Gases zum Reaktionsgemisch. Der Sauerstoff reagiert einerseits mit dem niederwertigen Katalysatorion, wobei ein Hydroxiradikal HO* entsteht, welches mit dem Substrat RH(2) ein Kohlenstoffradikal R*(2) bildet und andererseits mit den im Reaktionsgemisch vorhandenen Kohlenstoffradikalen R* zu Peroxidradikalen ROO* reagiert. In einer Folgereaktion mit dem Substrat RH(3) entsteht das Produkt ROOH unter Freisetzung weiterer Kohlenstoffradikale R*(3). Als O₂-haltiges Gas kommen Luft, Sauerstoff/Luft-Mischungen und reiner Sauerstoff vorzugsweise aber Luft in Frage.

Die Radikalkettenreaktion I und die Katalysatorreaktion II für sich allein betrachtet bilden den bekannten Fentons-Kreislauf, falls als Radikalstarter Wasserstoffperoxid und als Katalysator ein Eisensalz zur Anwendung gelangt.
Erfindungsgemäss wird der Radikalkettenreaktion I und der Katalysatorreaktion II eine Sauerstoffkettenreaktion III überlagert. Dadurch ergibt sich eine Kombination von 'just in time'-Kettenreaktionen, resp. eine Reaktionskette, in der das O₂-haltige Gas die Aufgabe als Hauptoxidationsmittel übernimmt. Durch das Zusammenwirken der Kreisläufe I, II und III in der beschriebenen Form wird die Reaktionskette aufrechterhalten. Vorteilhaft erweist sich, dass als Sauerstoffquelle vorwiegend Luft verwendet wird, was zu einer erheblichen Kostensenkung führt, aber auch, dass gesamthaft viel weniger Chemikalien verbraucht werden.
Hierbei ist speziell auf das Verhältnis des Radikalstarters zum Sauerstoff des O₂haltigen Gases, bzw. auf das Wasserstoffperoxid-/Sauerstoffverhältnis und auf eine spezifische Katalysatoraktivität zu achten. Typische Verhältnisse der durch Wasserstoffperoxid und Sauerstoff oxidierten Substratanteile, bzw. Abwasserinhaltstoffe, sind 1 : 0,5 bis 1 : 5. Dies bedeutet, dass bis zur fünffachen Menge des Wasserstoffperoxidanteiles durch den zugeführten Sauerstoff oxidiert werden kann.

Derart hohe Sauerstoffumsatzgrade werden nur durch das erfindungsgemässe Verfahren und Düsensystem ermöglicht. Bei richtiger Abstimmung der beteiligten Reaktionspartner liegt ein weiterer Vorteil des Verfahrens in der Möglichkeit, hohe Frachtkonzentrationen autotherm abzubauen und damit eine sehr kostengünstige Entsorgung zu erlauben.

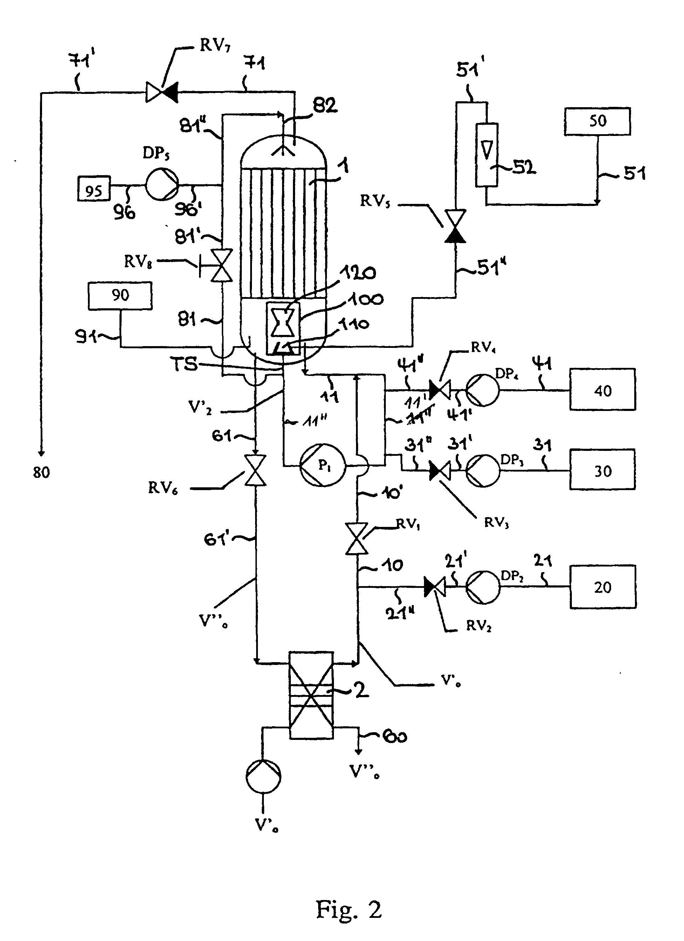

Fig. 2 zeigt eine Oxidationsanlage in schematischer Darstellung. Der in einem Wärmetauscher 2 auf eine Temperaturdifferenz von 5 - 20 °C bezüglich der Reaktionstemperatur vorgeheizte, mit organischer Fracht kontaminierte Wasserstrom, resp. der Abwasserstrom, V'ₒ wird über eine Leitung 10, ein Regelventil RV1, eine Leitung 10' dem Reaktorzirkulationstrom V'₂, bestehend aus den Leitungen 11, 11' und 11" im Saugteil der Pumpe P1 zugeführt. Die Leitung 11 verbindet einen Ausgang eines Reaktors 1 mit dem Eingang der Pumpe P1, die Leitung 11" den Ausgang der Pumpe P1 mit einem Düsensystem 100, das im unteren Teil des Reaktors angeordnet ist. Das Rückführverhältnis des Zirkulationsstromes beträgt 1 : 0 bis 1 : 20.
Eine Säure- bzw. Alkalizuführung 20 erfolgt über einen Dosierkreislauf mit Dosierpumpe DP₂, Dosierventil RV₂ und den Leitungen 21, 21' und 21" und mündet in die Leitung 10.
Die Zuführung eines Radikalstarters 30 erfolgt über einen Dosierkreislauf mit Dosierpumpe DP₃, Dosierventil RV₃ und den Leitungen 31, 31' und 31" und mündet in die Leitung 11'.
Die Zuführung eines Katalysators 40 erfolgt über einen Dosierkreislauf mit Dosierpumpe DP₄, Dosierventil RV₄ und den Leitungen 41, 41' und 41" und mündet ebenfalls in die Leitung 11'.
Die Zirkulationspumpe P1 dient sowohl als Mischaggregat für die zudosierten Chemikalien als auch zur Erzeugung eines Triebstrahles TS in Verbindung mit dem Düsensystem 100, bzw. einer Triebstrahldüse 110, welche sich im unteren Teil des Düsensystems 100 befindet.
Ein O₂-haltiges Gas 50 wird über ein Flowmeter 52, ein Dosierventil RV₅ und die Leitungen 51, 51' und 51" der Triebstrahldüse 110 zugeführt, wobei dies mittels seitlich angebrachter Gasdüsen im Unterdruckbereich des Triebstrahles erfolgt. Aufgrund des von der Geschwindigkeit des Triebstrahles abhängigen Unterdruckes kann der Gasstrom bis das 10-fache des Volumenstromes des Wassers betragen, wobei die disperse Phase immer durch das O₂-haltige Gas gebildet wird.
Geometrie, Eigenschaften und Funktion des Düsensystems werden später erläutert. Der Ablauf Vₒ" aus dem Reaktor erfolgt über ein Regelventil RV₆, den Wärmetauscher 2 und die Leitungen 61 und 61'. Die Entlüftung 80 des Reaktors erfolgt über ein Regelventil RV₇ und die Leitungen 71 und 71'. Eine Heizung 90 führt über eine Leitung 91 die für die Startbedingungen notwendige Energie dem Reaktor zu.
Aus der Leitung 11" wird ein Teil des Zirkulationsstromes über ein Regelventil RV₈ und die Leitungen 81, 81' und 81", welche auch als Duschleitungen bezeichnet werden, einer Absprühvorrichtung 82 zugeführt, die sich im oberen Teil des Reaktors befindet und u.a. der Schaumbekämpfung dient. Im weiteren sind hierzu Mittel 95 zur Erzeugung und Stabilisierung einer Mikrodispersion vorgesehen, welche über eine Dosierpumpe DP₅ und die Leitungen 96 und 96' der Leitung 81". bzw. der Absprühvorrichtung 82, zugeführt werden.

Im weiteren wird auf die Funktionsweise der Anlage näher eingegangen. Der Druckbereich des Reaktors liegt bei 2 - 10 bar, vorzugsweise bei 3 - 4 bar. Der Temperaturbereich liegt bei 80 - 140 °C, vorzugsweise bei 110 °C. Als Materialien für den Reaktor kommen V4A-Stähle in Frage. Damit sind die Anforderungen für die Sicherheit von Druckreaktoren in einfacher und kostengünstiger Weise zu erfüllen im Hinblick auf verschiedene Verordnungen, wie z.B. die Druckbehälterverordnung.
Die Stabilisierung einer Mikrodispersion wird durch die Zudosierung eines schaumarmen Tensides oder durch ein Polyethergemisch, beispielsweise ein Polyethylen/Polypropylenoxidcopolymerisat, erreicht. Gleichzeitig wird die Blasensäulenhöhe möglichst niedrig gehalten, um die Entgasung des Wassers zu erleichtern. Die Einbringung des Polyethers kann auch in den Reaktorzirkulationsstrom erfolgen.
Die Duschleitungen 81, 81' und 81" werden ebenfalls durch die Zirkutationspumpe P1 gespeist und der Fluss durch das Ventil RV₈ reguliert. Das sauerstoffarme Gasgemisch verlässt den Reaktor über die Leitungen 71 und 71' und das Regelventil RV₇. Die in der Anlaufphase benötigte Aufheizenergie kann im Bedarfsfall durch eine im Reaktor angebrachte elektrische Heizung zugeführt werden.

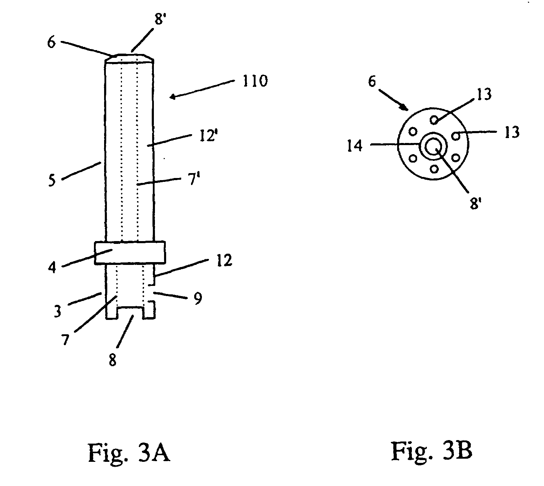

Fig. 3A und 3B zeigen schematisch eine erste Triebstrahldüse in Seitenansicht und in Aufsicht. Das für die Überlagerung der Radikalkettenreaktion I und der Sauerstoffkettenreaktion III sowie des damit verbundenen hohen Reaktionsumsatzes verantwortliche Düsensystem besteht im einfachsten Fall aus einer Triebstrahldüse 110. Die Triebstrahldüse 110 ist rotationssymmetrisch aufgebaut und besteht aus einem Düsenanschlussteil 3, einem Befestigungsteil 4 und einem vorderen Düsenteil 5, an dessen Stirnseite sich ein Düsenkopf 6 befindet. Der Düsenanschlussteil 3 weist einen zylindrischen Kanal 7 auf, an dessen einem Ende 8 der Triebstrahl zugeführt wird. Am anderen Ende mündet der Kanal 7 in den Befestigungsteil 4, führt durch diesen hindurch und mit leicht vermindertem Querschnitt als zylindrischer Kanal 7' durch den vorderen Düsenteil 5 und durch den Düsenkopf 6, an welchem sich die Austrittsöffnung 8' des Triebstrahles befindet. Der Düsenanschlussteil 3 weist seitlich eine weitere Öffnung 9 auf, die der Zuführung des O₂-haltigen Gases dient, welches in den ausserhalb des Kanales 7, 7' befindlichen Kammern 12, 12' zum Düsenkopf 6 geführt wird. Der Düsenkopf 6 weist 6 Bohrungen 13 auf, die um die Austrittsöffnung 8' des Triebstrahles angeordnet sind. Die Bohrungen 13 sind symmetrisch um das Triebstrahlrohr 14 angeordnet. Der Gasstrahl (Luft bzw. Luft-Sauerstoffgemisch) wird in feindisperser Form in den Triebstrahl eingearbeitet, um so einen maximalen Stoffaustausch zwischen den Gasbläschen und der umgebenden Flüssigkeit zu garantieren. Zur Erreichung hoher Umsatzgrade ist eine stabile Blasensäule mit einer Blasendurchmesserverteilung von 1 - 100 µm zu erzeugen.

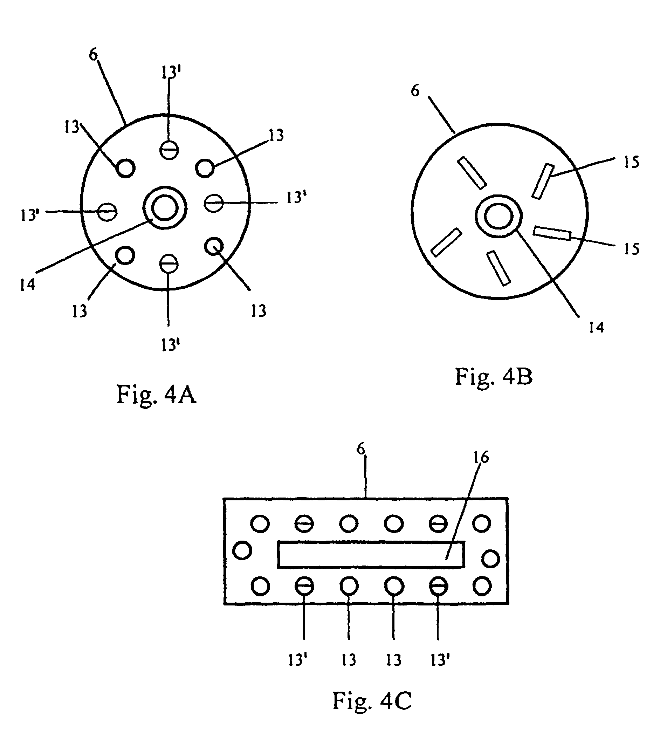

Fig. 4A - 4C zeigen weitere Ausführungsbeispiele einer Triebstrahldüse mit verschiedenen Düsenköpfen in Aufsicht.

Fig. 4A zeigt den Düsenkopf 6 mit der Austrittsöffnung 8', Triebstrahlrohr 14, und 4 Bohrungen 13 in bereits beschriebener Art. Zwischen den Bohrungen 13 befinden sich weitere 4 Bohrungen 13', durch die der Radikalstarter dem Triebstrahl zugeführt wird. Die Bohrungen 13 und 13' können gleich oder verschieden gross sein, je nach vorgegebenen Druckverhältnissen. Wesentlich ist, dass bei diesem Düsenkopf neben dem O₂-haltigen Gas auch der Radikalstarter durch den Düsenkopf geführt wird. Selbstverständlich ergibt sich hiermit eine Vielfalt von Düsenkopfausbildungen, die mit der Fig. 4A nur angedeutet wird.

Fig. 4B zeigt einen Düsenkopf 6 mit 5 schlitzförmigen Bohrungen, bzw. Austrittsöffnungen, für das O₂-haltige Gas, bzw. den Radikalstarter. Durch eine derartige Anordnung kann dem Triebstrahl durch das O₂-haltige Gas, bzw. durch den Radikalstarter, ein Drall versetzt werden, was sich für die Durchmischung vorteilhaft auswirkt.

Fig. 4C zeigt einen Düsenkopf 6 mit einem rechteckigen Querschnitt des Triebstrahlrohres 16, wodurch sich eine Schlitzdüse ergibt. Die Bohrungen 13, bzw. 13' sind hier um die rechteckige Öffnung angeordnet, und zwar trifft je eine Bohrung 13' auf zwei Bohrungen 13.

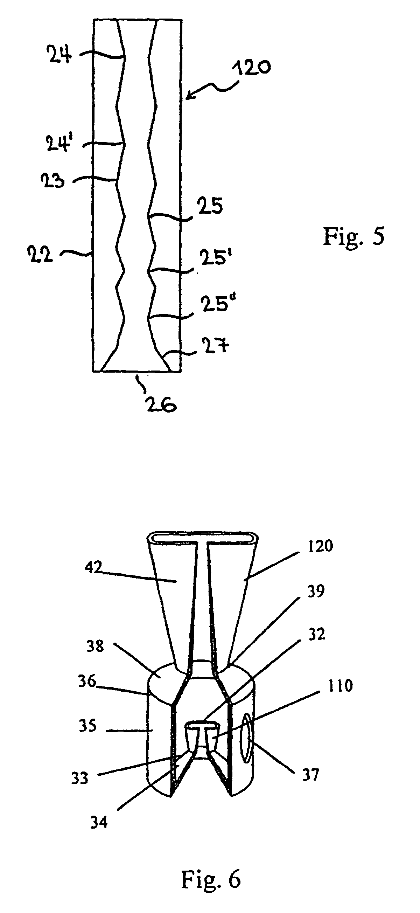

Fig. 5 zeigt eine Reaktionsdüse, die unmittelbar über der Triebstrahldüse angeordnet ist und ebenfalls zum Düsensystem gehört. Als Reaktionsdüse 120 wird vorzugsweise eine rotationssymmetrische mehrfache Lavaldüse (konvergente/divergente Düse) eingesetzt. Letztere ist rotationssymmetrisch aufgebaut mit einem zylindrischen Aussenmantel 22. Ein Innennrohr 23 ist als Mehrfach-Lavaldüse ausgebildet mit den Einschnürungen 24, 24' und 25, 25' und 25". Auf der einen Seite 26 weist die Reaktionsdüse einen Einlauftrichter 27 auf, der dem optimalen Einlauf des Reaktionsgutes, resp. des Triebstrahles und des O₂-haltigen Gases, dient. Als Materialien eignen sich nichtrostende Stähle oder keramische Materialien wie z.B. Porzellan. Durch die wiederkehrenden Strahleinschnürungen und Erweiterungen resultiert eine Strömungsrohrkaskade mit instationären Strömungsbedingungen und Kavitationserscheinungen, welche zu einer permanenten Luft- bzw. Sauerstoffeinmischung führen. Durch die geeignete Wahl der Triebstrahlgeschwindigkeit und der Einschnürungs- bzw. Erweiterungsradien kann das System, bis zur Kavitation angeregt, 60- 90 % des Gesamtreaktorumsatzes leisten. Die Einschnürungs- und Erweiterungsradien der Reaktionsdüse bewegen sich je nach Reaktorteistung zwischen 1 bis etwa 50 mm.

Die Kombination einer Triebstrahldüse mit einer nachgeschalteten Reaktionsdüse bildet ein zweistufiges Düsenkonzept. Das in Fig. 2 dargestellte Düsensystem 100 ist als Strömungsrohrreaktor ausgebildet und leistet 50 - 90 % des Reaktionsumsatzes, während der Reaktorkessel mit einem Rückführverhältnis (Zulaufstrom: Rückführstrom) von 1 : 0 bis 1 : 20 betrieben wird, um so wahlweise 40 - 90 %ige Substratabbauwerte zu erzielen. Aufgrund der direkt im Düsensystem erzeugten hohen Umsatzgraden können als Materialien für den Reaktor übliche V4A-Stähle und für diesen Anwendungsbereich niedrige Temperaturen von 80 - 140 °C verwendet werden. Für spezielle Anwendungen, z.B. bei der Anwesenheit hoher Chloridkonzentrationen, ist eine Beschichtung des Reaktorkessels angebracht. Das Düsensystem 100 besitzt, in Abhängigkeit der Reaktorleistung, eine Länge von 150 bis 5000 mm.

Fig. 6 zeigt ein Düsensystem mit Schlitzdüsen in isometrischer Darstellung (aufgeschnitten). Eine Triebstrahldüse 110 weist einen schlitzförmiger Querschnitt auf, der am oberen Ende 32 die Schlitzform deutlich erkennen lässt. Der untere Teil 33 der leicht konisch sich aufweitenden Triebstrahldüse ist auf einen konisch verlaufenden Teil 34 aufgesetzt. Dieser konische Teil 34 ist seinerseits mit einem zylindrischen Teil 35 verbunden, der an der Kante 36 den Abschluss der Triebstrahldüse bildet. Auf der einen Seite des zylindrischen Teiles 35 befindet sich eine Öffnung 37, die für die Zufuhr des O₂-haltigen Gases vorgesehen ist. Durch diese Öffnung wird das O₂-haltige Gas in den Unterdruckbereich des Triebstrahles geführt. Auf die Kante 36 ist ein weiterer konisch verlaufender Teil 38 aufgesetzt, der zur Reaktionsdüse 120 gehört und an der kreisrunden Begrenzung 39 in einen trichterförmigen Düsenteil 42 übergeht. Der Querschnitt dieses Düsenteils 42 geht über dessen ganze Länge kontinuierlich von einem kreisförmigen Querschnitt in einen schlitzförmigen Querschnitt über. Die Reaktionsdüse ist in diesem Düsensystem fest mit der Triebstrahldüse verbunden.

Eine weitere Möglichkeit zur Erzeugung instationärer Strömungsverhältnisse zur Maximierung des Stoffaustausches ergibt sich durch die Verwendung einer externen Anregungsquelle, wie z.B. Ultraschall- oder Vibrationssysteme.

Eine wesentliche erfindungsgemässe Funktion des Düsensystems ist die Erzeugung von instationären Strömungszuständen, in deren Folge Kavitationserscheinungen auftreten.

Die grossen Vorteile des beschriebenen Verfahrens liegen typisch in der Entsorgung hochbelasteter Teilströme, wobei eine optimal eingestellte Reaktionskette zwingende Vorbedingung für einen hohen Umsatzgrad ist. Die Betriebskosten liegen unter denjenigen bekannter Verfahren (z.B. Flockung, Flotation, LOPROX, FENTOX usw.). Die Verwendung üblicher V4A-Stähle löst die in diesem Zusammenhang bekannten Werkstoffprobleme.

Das Verfahren zeichnet sich aus durch seine Flexibilität für die Behandlung verschiedenartiger und verschieden konzentrierter Abwasserströme. Vorteile sind zudem/insbesondere der sehr geringe Schlammanfall, die hohe Biokompatibilität der Restfracht sowie der niedrige Chemikalienverbrauch. Aus der Kombination dieser Vorteile mit dem autothermen Betrieb und dem hohen Wirkungsgrad resultiert ein ausserordentlich kostengünstiges Entsorgungsverfahren.

Beispiel 1 beschreibt eine Anlage mit Triebstrahldüse und einer niedrigen CSB-Belastung hervorgerufen durch gefärbte Abwässer.
Ein mit Reaktiv- und Pigmentfarbstoffen kontaminierter Abwasserstrom, der wegen seiner Farbigkeit vorbehandelt werden muss, weist einen CSB-Wert von 2'600 mg O₂/l auf. Aufgrund der sehr guten Oxidierbarkeit der Abwasserinhaltstoffe und der Forderung, nur eine Entfärbung durchzuführen, erfolgt die Oxidation lediglich mit Hilfe einer Triebstrahldüse. Hierbei werden 3.5 m³/h des Abwassers über den Zirkulationsstrom und die Triebstrahldüse in den Reaktor von 2500 l Nennvolumen geleitet. Das Füllvolumen des Reaktors beträgt 880 l, wobei die mit der Begasung entstehende Blasensäule ein Volumen von 1'400 l erreicht. Die eingestellte Zirkulationsströmung von 12 m³/h garantiert ein Rückführverhältnis von 1 : 3 bis 1 : 4. Dies bedeutet, dass im Mittel jedes dem Reaktor zugeführte Volumenelement drei- bis viermal die Triebstrahldüse passiert und demzufolge drei- bis viermal mit Sauerstoff beaufschlagt wird.
Die Sauerstoffbeladung des Abwassers erfolgt mit Luft, indem im Unterdruckbereich der Triebstrahldüse 45 Nm³/h Luft eingebracht werden. Das dem Reaktor zugeführte Abwasser wird auf einen pH-Wert von 3.0 eingestellt und die zugeführte Peroxidmenge beträgt 0.55 l/min einer 35 %igen Lösung. Als Katalysator wird eine Mischung aus Eisen- und Mangansulfat (molar 2 : 1) als 15 %ige Lösung in den Zirkulationsstrom gepumpt. Zur besseren Dispersionsstabilisierung des Luft/Wassergemisches werden in die Duschleitung 0.1 l/min einer 10 %igen Lösung eines Ethylen/Propylenoxidderivates (Pluronic PE 6800, BASF) zudosiert, welches gleichzeitig auch die Schaumbildung minimiert. Aufgrund der relativ niedrigen CSB-Belastung des Eingangsstromes muss der Reaktorbetrieb mit externer Wärmezufuhr gestützt werden. Die Betriebsbedingungen des Oxidationsprozesses betragen 115 °C und 3.5 bar. Die beschriebenen Prozessbedingungen führen zu einer vollständigen Entfärbung und einer 32 %igen CSB-Entlastung.
Der Vorteil dieser Betriebsweise ist die vollständige Entfärbung sowie die gute Biokompatibilität bei nur teilweiser CSB-Entlastung des Abwassers, da in diesem Fall eine Kontaminierung bis zu 2000 mg O₂/l erlaubt ist, sofern die in die Kläranlage eingeleiteten Abwasserinhaltstoffe biokompatibel sind. Die Biokompatibilität wird als BSB₅/CSB-Verhältnis ausgedrückt und erreicht in diesem Beispiel einen Wert von 0.7. Glukose als Vergleichssubstrat zeigt ein BSB₅/CSB-Verhältnis von ca. 0.8.

Beispiel 2 beschreibt eine Anlage mit Triebstrahldüse und einer Mehrfach-Lavaldüse. Ein hochbelastetes auf pH 3.4 eingestelltes Industrieabwasser mit einer CSB-Konzentration von 8000 mg O₂/l wird im Wärmetauscher durch das Reaktorabflusswasser auf 110 °C vorgeheizt und kontinuierlich mit 2000 l/h in den Reaktorzirkulationsstrom gepumpt. Gleichzeitig erfolgt die Zudosierung von 0.05 l/min einer 15 %igen Eisensulfatlösung sowie 0.3 l/min einer 35 %igen Wasserstoffperoxidlösung. Die Zirkulationspumpe fördert das Abwasser/Chemikaliengemisch mit 12 m³/h und einem Düsenvordruck von 7 bar in die Triebstrahldüse wobei die Strahlgeschwindigkeit im Düsenaustritt 35 m/sec beträgt. Ein Luftstrom von 45 m³/h wird über drei seitlich in der Triebstrahldüse integrierte Gasrohre von 2 mm Durchmesser in den Triebstrahl eingeführt und die Gasflüssigkeitdispersion durch die 450 mm lange Dreifachlavaldüse geströmt. Die Reaktionstemperatur beträgt 120 °C und der Reaktordruck 2.5 bar. Der in Verbindung mit den Abwasserinhaltstoffen (Faseravivagen, Emulgatoren und Dispergatoren) und den beschriebenen Reaktionsbedingungen erreichte CSB-Abbau beträgt 83 %. Als sehr vorteilhaft und kostengünstig erweist sich dabei der autotherme Reaktorbetrieb, der geringe Peroxideinsatz sowie der schlammfreie 83 %ige Entsorgungsgrad, da die Hauptreaktionsprodukte CO₂ und Wasser sind.

Beispiel 3 beschreibt eine Anlage mit einer Triebstrahldüse und einer zylindrischen Reaktordüse, sowie einer externen Anregung.
Ein auf pH 2.5 eingestellter Abwasserstrom von 4.5 m³/h mit einer CSB-Konzentration von 5500 mg O₂/l, welche durch Polysaccharide, Reaktivfarbstoffe und Tenside verursacht wurde, wird im Wärmetauscher durch das Reaktorabflusswasser auf 100 °C vorgeheizt und in den Reaktorzirkulationsstrom gepumpt. Die mittlere hydrodynamische Verweilzeit unter diesen Betriebsbedingungen beträgt 20 Minuten. Als Radikalstarter wird eine Mischung bestehend aus 95 % Wasserstoffperoxid (35 %) und 5 % Azobisisobutyronitril (AIBN) mit einer Dosierrate von 0.5 l/min in den Zirkulationsstrom dosiert. Die Katalysatordosierung, bestehend aus einem 20 %igen Eisencitratkomplex beträgt 0.06 l/min und erfolgt ebenfalls in den Zirkulationsstrom. Zur Stabilisierung der Mikroemulsion werden 0.02 l/min einer 10 %igen Lösung eines Ethylen/Propylenoxidcopolymeren in den Düsenbereich des Reaktors zugegeben. Die Sauerstoffzufuhr erfolgt über ein Gemisch aus 50 % Luft und 50 % technischem Sauerstoff mit einer Förderrate von 60 m³/h in den Triebstrahl, welcher mit einer Geschwindigkeit von 45 m/sec durch die zylinderische Reaktionsdüse gefördert wird. Die Reaktionstemperatur beträgt 110 °C bei einem eingestellten Reaktordruck von 3 bar. Zur Sicherstellung des autothermen Reaktorbetriebes wird das zugeführte Abwasser in einem Wärmetauscher auf 100°C vorgeheizt. Zur Erzeugung instationärer Strömungsbedingungen werden unmittelbar vor dem Düsensystem fünf Ultraschallköpfe mit je 300 W Leistung in den Zirkulationsstrom installiert. Dadurch werden Druckwellen im Fluid erzeugt, welche im Düsensystem zu Kavitationserscheinungen führen, in deren Folge ein optimaler Stoffaustausch zwischen der Gas- und Flüssigphase stattfindet.
Der durch diese Betriebsweise erzielte CSB-Abbau liegt bei 85 %, wobei der durch das Wasserstoffperoxid verursachte Oxidationsanteil 20 % und der durch den Sauerstoff verursachte 65 % beträgt.

Beispiel 4 beschreibt eine Anlage mit einem Schlitzdüsensystem und hohen CSB-Werten.
Ein hochbelasteter Industrieabwasserstrom mit einer Belastung von 40'000 mg O₂/l aus Altölabfällen wird auf pH 2 eingestellt und mit 2.3 m³/h dem Reaktor zugeführt. Die Reaktionstemperatur beträgt 135°C, wobei der Reaktorzufluss durch das abfliessende, entsorgte Abwasser auf 128 °C aufgeheizt wird. Das Abwasser wird über die Zirkulationspumpe einer zweifachen Schlitzdüse zugeführt. Die Abmessungen der Schlitzdüsen betragen 11 mm x 2.5 mm (Triebstrahldüse), bzw. 18 mm x 1.6 mm (Reaktionsdüse), wobei drei solcher Zweifachdüsensysteme installiert sind. Das sauerstoffhaltige Gas wird in den Unterdruckbereich der Triebstrahldüse eingeleitet und mit dem Triebstrahl vermischt. Durch die Reaktionsdüse treten innerhalb der Düsenkammer instationäre Druckverhältnisse auf, wobei das Fluid zu kavitieren beginnt und ein intensiver Sauerstoffaustausch sichergestellt ist. Die dem Reaktorzufluss beigefügte Peroxidmenge beträgt 25 % bezogen auf die 40'000 mg O₂/l und jene des Katalysators 0.004 mol/l. Als Katalysator wird eine 15 gewichtsprozentige Eisensulfatlösung eingesetzt. Die zur Oxidation benötigte Luftmenge beträgt 80 Nm³/h. Durch die Einstellung einer mittleren Verweilzeit von 40 min und einem Rücklaufverhältnis von 1 : 5 wird ein 82 %iger CSB-Abbaugrad erreicht. Aufgrund des effizienten Sauerstoffaustausches und der hohen CSB-Konzentration kann ein autothermer Reaktorbetrieb mit einer 60 %igen Sauerstoffoxidation sichergestellt werden bei einem Gesamtabbau von 85 %.

## Patentansprüche

1. Verfahren zum kontinuierlichen Betrieb einer Anlage zur Behandlung von' organisch belasteten Abwässern in einem Reaktor *(1)* mit einem vorgeschalteten Wärmetauscher *(2)* und mit mindestens einem Düsensystem *(100) und einer Triebstrahldüse (110)* durch Zugabe eines Radikalstarters *(30),* eines Katalysators *(40)* und eines O₂-haltigen Gases *(50),* **dadurch gekennzeichnet, dass** das Abwasser in einem Wärmetauscher (2) vortemperiert und *mit dem aus dem Reaktor (1) austretenden Reaktorzirkulationsstrom (V'*_{*2*}*) vereinigt* und dann zusammen mit diesem über mindestens ein Düsensystem (100) mit einer Triebstrahldüse (110) als Triebstrahl (TS) *von unten* in den Reaktor (1) geführt wird, *wobei aus dem Triebstrahl (TS) vor dem Eintritt in den Reaktor (1) ein Teil abgezweigt und von oben in den Reaktor (1) eingeführt wird, dass dem Rezirkulationsstrom oder dem vor Eintritt in den Reaktor (1) daraus abgezweigten Teil des Triebstrahls (TS) ein Mittel (95) zur Erzeugung und Stabilisierung einer Mikrodispersion zugesetzt wird,* **dass** *dem Rezirkulationsstrom ein Radikalstarter (30), ein Katalysator (40) und dem Triebstrahl in der Triebstrahldüse (110) ein O*_{*2*}*-haltiges Gas (50)* beigemischt werden, wobei eine instationäre Strömung erzeugt und eine Reaktionskette gestartet und aufrechterhalten wird, dass in dieser Reaktionskette eine Überlagerung der durch den Radikalstarter ausgelösten Radikalkettenreaktion und der vom O₂haltigen Gas ausgelösten O₂-Kettenreaktion erfolgt, in deren Folge der Katalysator seine Wertigkeit zyklisch ändert, und dass dadurch der Abbau der zu oxidierenden Abwasserinhaltstoffe bewirkt wird.

2. Verfahren nach Anspruch 1, **dadurch gekennzeichnet, dass** mehrere Düsensysteme in einem Reaktor integriert und durch zentrale Speiseleitungen für Fluide und das O₂-haltige Gas miteinander verbunden werden.

3. Verfahren na ch Anspruch 1 oder 2, **dadurch gekennzeichnet, dass** die instationäre Strömung durch eine pulsierende Kompression der Fluid- und Gaskomponenten erfolgt, wobei ein Kavitationseffekt erzielt wird.

4. Verfahren nach einem der Ansprüche 1 -3, **dadurch gekennzeichnet, dass** die Zufuhr des O₂-haltigen Gases als Luft, als Sauerstoff/Luftmischung oder als reiner Sauerstoff, in einem Volumenstromverhältnis zum Triebstrahl von 1 : 1 bis 10 : 1 erfolgt..

5. Verfahren nach einem der Ansprüche 1 -4, **dadurch gekennzeichnet, dass** durch den Sauerstoff des O₂-haltigen Gases ein Oxidationsanteil von 50% bis 500 % des Peroxidanteils, vorzugsweise 300 %, erzielt wird.

6. Verfahren nach einem der Ansprüche 1 -5, **dadurch gekennzeichnet, dass** als Katalysatoren Übergangsmetallionen, wie beispielsweise jene von Eisen-, Mangan-, Kupfer und Chromsalzen, in Konzentrationen von 0.001 -0.1 mol/l, als Radikalstarter sauerstoffradikalbildende Verbindungen aus der Gruppe der Peroxide, vorzugsweise Wasserstoffperoxid, oder kohlenstoffradikalbildende Verbindungen aus der Gruppe der Azo-Verbindungen, bzw. deren Mischungen, in Konzentrationen von 0.1 -40 %, bezogen auf den chemischen Sauerstoffbedarf der zu oxidierenden Abwasserinhaltstoffe, eingesetzt werden.

7. Verfahren nach einem der Ansprüche 1 -6. **dadurch gekennzeichnet, dass** Chemikalien zur pH-Wert-Steuerung dem Triebstrahl zugeführt werden, sowie Mittel zur Erzeugung und Stabilisierung einer Mikrodispersion zugesetzt werden, wobei als Mittel Polyether, bzw. adäquate Tenside, in den Konzentrationen von 0.001 bis 0.1 g/l verwendet werden.

8. Verfahren nach einem der Ansprüche 1 -7, **dadurch gekennzeichnet, dass** die Betriebstemperatur des Reaktors bei 80 -140 °C, vorzugsweise bei 110 °C, liegt.

9. Verfahren nach einem der Ansprüche 1 -8, **dadurch gekennzeichnet, dass** der Düsenvordruck bei 5 -12 bar, vorzugsweise bei 7 bar, und die Triebstrahlgeschwindigkeit bei 10 -80 m/sec, vorzugsweise bei 30 m/sec, liegen.

10. Anlage zur Durchführung des Verfahrens nach einem der Ansprüche 1 - 9, umfassend einen Reaktor*(1)* mit vorgeschaltetem Wärmetauscher *(2)* mit Zu- und Abläufen für das Abwasser, einer Wärmezufuhr und eine Abluftleitung, mit Dosierstrecken für einen Radikalstarter *(30),* einen Katalysator *(40),* für Säure, bzw. Lauge und ein O₂-haltiges Gas *(50)*, eine Rezirkulationspumpe (P1), und ein Düsensystem *(100),* wobei der Reaktor (1) im unteren Teil mindestens ein *mit der Abwasserzuführung verbundenes* Düsensystem *(100)* aufweist, das eine Triebstrahldüse (110) und eine Reaktionsdüse (120) zur Erzeugung einer instationären Strömung aufweist, und eine Leitung (81, 81' 81") vorgesehen ist, die den Zulauf des Abwassers über ein Ventil (RV₈) mit dem oberen Teil des Reaktors verbindet, und Mittel für die Zudosierung der Mittel (95) zur Erzeugung und Stabilisierung einer Mikrodispersion vorgesehen sind.

11. Anlage nach Anspruch 10, **dadurch gekennzeichnet, dass** der Reaktor als Schlaufenreaktor oder als Rohrbündelreaktor ausgebildet ist.

12. *Anlage* nach Anspruch 10 oder 11, **dadurch gekennzeichnet, dass** *das Düsensystem (100)* eine Triebstrahldüse *(110)* aufweist, bei welcher ein innerer Kanal für das Abwasser vorgesehen ist und bei welcher im Unterdruckbereich der Triebstrahldüse Düsen für die Zuführung der weiteren Reaktionspartner angeordnet sind.

13. *Anlage* nach Anspruch 12, **dadurch gekennzeichnet, dass** der weitere Reaktionspartner das O₂-haltige Gas ist, wofür mindestens 3 *um den Treibstrahl (TS) angeordnete* Gasdüsen (13) mit einem inneren Durchmesser von 0.2- 5 mm, vorzugsweise von 1 mm, bzw. eine in Kammern aufgeteilte Ringdüse vorgesehen ist.

14. *Anlage* nach einem der Ansprüche 12 *oder 13*, **dadurch gekennzeichnet, dass** die Triebstrahldüse *(110)* einen inneren Durchmesser von 2 - 20 mm, vorzugsweise von 6 mm, aufweist.

15. *Anlage* nach Anspruch *12*, **dadurch gekennzeichnet, dass** die Reaktionsdüse *(120)* als Einfach-Lavaldüse oder eine Mehrfach-Lavaldüse ausgebildet ist.

16. *Anlage* nach Anspruch *12* oder 15, **dadurch gekennzeichnet, dass** die Triebstrahldüse *(110)* und/oder die Reaktionsdüse *(120)* als Schlitzdüsen *(15), (16)* mit rechteckigem Querschnitt ausgebildet sind.

## Claims

1. Process for the continuous operation of an installation for the treatment of organically contaminated sewage water in a reactor (1) with an upstream heat exchanger (2) and with at least one nozzle system (100) and a motive jet nozzle (110) by the addition of a radical starter (30), a catalyst (40) and a gas containing O₂ (50), wherein the sewage water is pre-tempered in a heat exchanger (2) and merged with the reactor circulation flow (V'₂) emerging from the reactor and then fed together with said circulation flow from below via at least one nozzle system (100) with a motive jet nozzle (110) as a motive jet (TS) into the reactor (1), a part of the motive jet (TS) being branched off from the motive jet (TS) before the inlet into the reactor (1) and fed in to the reactor (1) from above, wherein an agent (95) for creating and stabilizing a microdispersion process is added to the recirculation flow or to the branched off part of the motive jet (TS) before entry into the reactor (1), wherein a radical starter (30) and a catalyst (40) are added to the recirculation flow and a gas containing O₂ (50) to the motive jet in the motive jet nozzle (110), thereby creating an non-stationary flow and starting and maintaining a reaction chain, wherein a superimposition of the radical chain reaction triggered by the radical starter and of the O₂ chain reaction triggered by the radical starter and the O₂ reaction triggered by the gas containing O₂ takes place, as a consequence of which the catalyst cyclicly alters its valence, and wherein the degradation of the materials carried by the sewage water is thereby effected.

2. Process as claimed in claim 1, wherein a number of nozzle systems are integrated in a reactor and interconnected by central supply lines for fluids and the O₂-containing gas.

3. Process as claimed in claim 1 or 2, wherein the non-stationary flow is effected by pulsating compression of the fluid and gas components, thereby achieving a cavitation effect.

4. Process as claimed in any one of claims 1 - 3, wherein the infeed of the gas containing O₂ in a volumetric ratio with the motive jet of 1 : 1 to 10 : 1 takes place in the form of air, of an oxygen/air mixture or of pure oxygen.

5. Process as claimed in any one of claims 1 - 4, wherein as a result of the oxygen of the gas containing O₂ an oxidation fraction of 50% to 500%, preferably 300%, of the peroxide fraction is achieved.

6. Process as claimed in any one of claims 1 - 5, wherein transitional metal ions such as those of iron, manganese, copper and chrome salts in concentrations of 0.001 - 0.1 mol/ltr., as radical starters of oxygen radical-forming compounds from the group of peroxides, preferably hydrogen peroxide, or carbon radical-forming compounds from the group of azo compounds or the mixtures thereof in concentrations of 0.1 - 40% related to the chemical oxygen demand of the materials carried by the sewage water to be oxidized, are used as catalysts.

7. Process as claimed in any one of claims 1 - 6, where chemicals are added to the motive jet for the pH value adjustment, as are also agents for the purpose of creating and stabilizing a microdispersion process, the agents used being polyether or adequate tensides in the concentrations of 0.001 to 0.1 g/ltr.

8. Process as claimed in any one of claims 1 - 7, wherein the reactor operating temperature is around 80° - 140° C, preferable around 110° C.

9. Process as claimed in any one of claims 1 - 8, wherein the nozzle pressure is at around 5 - 12 bar, preferably around 7 bar. and the motive jet velocity at around 10 - 80 m/sec, preferably around 30 m/sec.

10. Installation for carrying out the process as claimed in any one of claims 1 - 9, encompassing a reactor (1) with a heat exchanger (2) arranged upstream, with sewage water feed and discharge branches, a heat input and an exhaust air line, with apportioning stations for a radical starter (30), for a catalyst (40), for acid or lye and for a gas containing O₂ (50), a recirculation pump (P1) and a nozzle system (100), the reactor (1) having in its lower part at least one nozzle system (100) with a motive jet nozzle (110) and a reaction nozzle (120) for producing a non-stationary flow which is connected with the sewage water supply line, a line (81, 81', 81") being provided which connects the sewage water infeed with the upper part of the reactor via a valve (RV₈), and means being provided for the apportioning of the agents (95) for the creation and stabilization of a microdisperson process.

11. Installation as claimed in claim 10, wherein the reactor is of the loop or tube-bundle reactor type.

12. Installation as claimed in claim 10 or 11, wherein the nozzle system (100) has a motive jet nozzle (110) with which an inner duct for the sewage water is provided and with which in the underpressure of the motive jet nozzle nozzles are provided for the infeed of the other reaction partners.

13. Installation as claimed in claim 12, wherein the other reaction partner is the gas containing O₂, for which purpose at least 3 gas nozzles (13) with an inside diameter of 0.2 - 5 mm, preferably of 1 mm, are arranged around the motive jet (TS), or an annular nozzle divided into compartments is provided.

14. Installation as claimed in claim 12 or 13, wherein the motive jet nozzle (110) has an inside diameter of 2 - 20 mm, preferably 6 mm.

15. Installation as claimed in claim 12, wherein the reaction nozzle (120) is of the single Laval nozzle or multiple Laval nozzle type.

16. Installation as claimed in claim 12 or 15, wherein the motive jet nozzle (110) and/or the reaction nozzle (120) is of slotted nozzle construction (15), (16) with rectangular cross section.

## Revendications

1. Procédé pour le traitement en service continu d'eaux usées chargée en matière organiques dans un réacteur (1) avec branchement en amont d'un échangeur de chaleur (2) et au moins un système de tuyère (100) et une tuyère à flux propulsif (110) par adjonction d'un starter radical (30), d'un catalyseur (40) et d'un gaz à teneur en O₂ (50), **caractérisé par le fait que** les eaux usées sont préchauffées dans un échangeur de chaleur (2) et réunies avec le courant de circulation (V'₂) issu du réacteur (1) puis passent avec celui-ci dans au moins un système de tuyère (100) et une tuyère à flux propulsif (110) comme flux de propulsion (TS) dans la partie inférieure du réacteur (1), en tenant compte qu'une partie du flux de propulsion (TS) est prélevée avant l'entrée dans le réacteur (1) pour être introduite dans la partie supérieure du réacteur (1), qu'au courant de recirculation ou à la partie dérivée du flux de propulsion (TS) avant l'entrée dans le réacteur (1) on ajoute un agent (95) pour la création et la stabilisation d'une micro dispersion, que l'on mélange au courant de recirculation un starter radial (30) et un catalyseur (40) et qu'au flux de propulsion de la tuyère propulsive (110) on mélange un gaz contenant de l'O₂ (50), provoquant ainsi un courant non stationnaire et provoquant le démarrage et le maintien d'une chaîne de réaction, que dans cette chaîne de réaction on trouve une chaîne de réaction radicale superposée provoquée par le starter radical et que le gaz à teneur en O₂ provoque à son tour une chaîne de réaction en chaîne O₂ au cours de laquelle le catalyseur change sa valence de manière cyclique et provoquant par là l'élimination des matières contenues dans les eaux usées.

2. Procédé selon revendication 1, **caractérisé en ce que** plusieurs systèmes de tuyères soient intégrées dans un réacteur et qu'elles soient reliées entre elles par un système d'alimentation centralisé pour les fluides et les gaz à teneur en O₂.

3. Procédé selon revendication 1 ou 2 **caractérisé en ce que** le courant non stationnaire est provoqué par une compression pulsante des composants fluides et gazeux en tenant compte qu'un effet de cavitation se manifeste.

4. Procédé selon revendications 1 - 3 **caractérisé en ce que** l'apport du gaz à teneur en O₂ a lieu sous forme d'air, d'un mélange oxygène/air ou sous forme d'oxygène pur, dans un rapport volumétrique compris entre 1 :1 jusqu'à 10 :1 en regard du flux de propulsion.

5. Procédé selon revendications 1 - 4 **caractérisé en ce que** l'oxygène du gaz à teneur en O₂ présente un degré d'oxydation de 50% jusqu'à 300% de la teneur en peroxyde.

6. Procédé selon revendications 1 - 5 caractérisé en l'utilisation de ions métalliques de transition comme catalyseurs, comme par exemple ceux du fer, du manganèse, du cuivre et de sels de chrome, dans des concentrations de 0.001 - 0.1 mol/l, comme starter radicaux des liaisons de formation radicales d'oxygène du groupe des peroxydes, de préférence du peroxyde d'hydrogène, ou des liaisons de formation radicales de carbone du groupe des liaisons azotées, resp. de leur mélange, dans des concentrations de 0.1 - 40%, par rapport au besoin chimique en oxygène des matières à oxyder contenues dans les eaux usées.

7. Procédé selon revendications 1 - 6 **caractérisé en ce que** des produits chimiques soient distribués pour la commande de la valeur pH du flux de propulsion, ainsi que l'adjonction de produits pour l'établissement et la stabilisation d'une micro dispersion, où comme produit on utilise du polyéther, resp. des Tenside adéquats, dans des concentrations de 0.001 à 0.1 g/l.

8. Procédé selon revendications 1 - 7 **caractérisé en ce que** la température de service du réacteur soit comprise entre 80 - 140°C, de préférence vers 110°C.

9. Procédé selon revendications 1 - 8 **caractérisé en ce que** la pression amont soit comprise entre 5 - 12 bar, de préférence vers 7 bar et que la vitesse du flux de propulsion soit comprise entre 10 - 80 m/s, de préférence vers 30 m/s.

10. Installation pour l'exécution du procédé selon les revendications 1 - 9, comprenant un réacteur (1) avec branchement en amont d'un échangeur de chaleur (2) avec entrés et sortie pour les eaux usées, un apport de chaleur et une tuyère d'échappement, avec des zones de dosage pour un starter radial (30), un catalyseur (40), pour un acide, resp. une base et un gaz à teneur en O₂ (50), une pompe de recirculation (P1) et un système de tuyères (100)en remarquant que le réacteur (1) comporte dans sa partie inférieure au moins un système de tuyère (100) relié au système d'adjonction des eaux usées, une tuyère à flux propulsif (110) et une tuyère de réaction (120) pour l'obtention d'un courant non stationnaire et une conduite (81,81',81") prévue pour l'apport d'eaux usées par l'intermédiaire d'une soupape (RV₈) à la partie supérieure du réacteur et servant de moyen pour le dosage de produits destiné à la production et la stabilisation d'une micro dispersion.

11. Installation selon revendication 10 **caractérisée en ce que** le réacteur est constitué comme réacteur à boucle ou comme réacteur à assemblage de tubes.

12. Installation selon revendication 10 ou 11 **caractérisée en ce que** le système de tuyère (100) comporte une tuyère à flux propulsif (110), dans laquelle un canal intérieur pour les eaux usées est prévu et dans laquelle au cours de la phase de dépression de la tuyère à flux propulsif des tuyères pour l'adjonction d'autres partenaire de la réaction sont apposés.

13. Installation selon revendication 12 **caractérisée en ce que** le paramètre suivant de la réaction est constitué par le gaz à teneur en O₂, pour lequel sont prévus au moins 3 tuyères de gaz (13) disposées autour de la tuyère à flux propulsif (TS) possédant un diamètre intérieur de 0.2 - 5 mm, de préférence 1 mm, resp. une tuyère en anneau subdivisée en chambres.

14. Installation selon revendication 12 ou 13 **caractérisée en ce que** la tuyère à flux propulsif (110) possède un diamètre de 2 - 20 mm, de préférence de 6 mm.

15. Installation selon revendication 12 **caractérisée en ce que** la tuyère de réaction (120) soit constituée d'une tuyère Laval simple ou une tuyère Laval multiple.

16. Installation selon revendication 12 ou 15 **caractérisée en ce que** la tuyère à flux propulsif (110) et/ou la tuyère de réaction (120) soient constituées de tuyères à fentes (15), (16) avec une section rectangulaire.
